# EUROPÄISCHE PATENTANMELDUNG

(11) **EP 0 730 199 A1**
(43) Veröffentlichungstag der Anmeldung: **04.09.1996**
(21) Anmeldenummer: 95810132.1
(22) Anmeldetag: 02.03.1995
(51) Int. Cl.: G03D 13/00, G03B 21/32

(54) **Speicher für bandförmiges fotografisches Kopiermaterial**

(71) Anmelder: GRETAG IMAGING AG, CH-8105 Regensdorf (CH)
(72) Erfinder: Frei, Hans, CH-5105 Auenstein (CH); Conner, Dale Alan, South-Daleville, IN 47334 (US)
(74) Vertreter: Kleewein, Walter, Dr.

(57) **Zusammenfassung**

Ein Speicher (1) für bandförmiges fotografisches Kopiermaterial (P) weist einen Einlass, durch den das Kopiermaterial in den Innenraum des Speichers geführt ist, und einen Auslass auf, durch den das Kopiermaterial wieder aus dem Innenraum des Speichers herausgeführt ist. Weiterhin umfasste er Mittel zum Transport des in den Innenraum des Speichers eingetretenen Kopiermaterials. Diese Mittel zum Transport des eingetretenen Kopiermaterials umfassen eine um eine Drehachse (A) herum rotierbare Scheibe (4), gegen welche eine Seitenkante des eingetretenen Kopiermaterials (P) anliegt. Das in den Speicher eintretende Kopiermaterial tritt im Aussenbereich des Innenraums ein, welcher von der Drehachse (A) der Scheibe (4) am weitesten entfernt ist. Das aus dem Innenraum austretende Kopiermaterial hingegen ist im Innenbereich nahe der Drehachse (A) der Scheibe (4) aus dem Speicher herausgeführt.

## Beschreibung

Die Erfindung betrifft einen Speicher für bandförmiges fotografisches Kopiermaterial gemäss dem Oberbegriff von Patentanspruch 1.

Derartige Speicher sind in fotografischen Verarbeitungsstrecken, wie sie in industriellen Grosslabors eingesetzt werden, absolut gängig. In solchen Grosslabors werden in sehr grosser Zahl und in vielen verschiedenen Varianten Kopien von fotografischen Kopiervorlagen erstellt. Die wohl häufigste Variante ist, dass Papierbilder durch Aufkopieren der Negativbildfelder eines Films auf lichtempfindliches Fotopapier erstellt werden.

In einer solchen Verarbeitungsstrecke erfolgen heutzutage praktisch alle Schritte mehr oder weniger vollautomatisch. Diejenigen Stationen einer solchen Verarbeitungsstrecke, die mit der Behandlung des Films und des Fotopapiers befasst sind, werden im folgenden kurz erläutert.

Zunächst wird der Film in einer Filmentwicklungsstation entwickelt. Anschliessend wird der entwickelte Film an die Kopierstation weitergeleitet. Dort werden die einzelnen Negativbildfelder ausgemessen und die erforderlichen Kopierlichtmengen ermittelt. Anschliessend werden die Negativbildfelder mit den ermittelten Kopierlichtmengen auf das lichtempfindliche Fotopapier aufkopiert. Eine solche Kopierstation wird auch als Printer bezeichnet. Das belichtete Fotopapier wird nun einer Papierentwicklungsstation zugeführt, in welcher die Papierbilder nasschemisch entwickelt werden. Eine solche Papierentwicklungsstation wird auch als Papierprozessor bezeichnet.

Die oben beschriebene Bearbeitung sowohl der Filme wie auch des Fotopapiers erfolgt in Form von langen Bändern. Die einzelnen Filme werden vor Ihrer eigentlichen Bearbeitung zusammengespleisst, das Fotopapier wird von vorneherein in Form einer Rolle, auf die ein langes Band Fotopapier aufgewickelt ist, bereitgestellt.

Die einzelnen Stationen einer solchen Verarbeitungsstrecke, speziell auch der Printer, arbeiten zum Teil mit Schwankungen in der Bearbeitungsgeschwindigkeit. Da aber für eine gleichmässige Entwicklung des belichteten Fotopapiers die Verweilzeit im Papierprozessor konstant sein muss, müssen Schwankungen der Bearbeitungsgeschwindigkeit des Printers auf irgendeine Weise kompensiert werden, andernfalls müsste der Betrieb des Printers bei Schwankungen der Bearbeitungsgeschwindigkeit immer wieder unterbrochen werden.

Zu diesem Zweck setzt man bei solchen Verarbeitungsstrecken sogenannte Zwischenspeicher, im folgenden als Speicher bezeichnet, zwischen einzelnen Stationen der Verarbeitungsstrecke ein. Speziell zwischen dem Printer und dem Papierprozessor handelt es sich natürlich um einen Papierspeicher (zwischen der Filmentwicklungsstation und dem Printer handelt es sich analog um einen Filmspeicher).

Beim Betrieb einer Verarbeitungsstrecke wird dieser Papierspeicher zu einem bestimmten Grad mit Fotopapier gefüllt, damit Schwankungen der Verarbeitungsgeschwindigkeiten sowohl nach oben wie auch nach untern durch Befüllen bzw. Entleeren des Speichers aufgefangen werden können.

Papierspeicher dieser Art sind beispielsweise aus der US-A-4,782,354 oder aus der US-A-5.237,359 bekannt. Grundsätzlich erfüllen diese Speicher den obengenannten Zweck. Allerdings sind beide Speicher konstruktionsbedingt relativ grossvolumig. Die Anforderungen hingegen gehen heutzutage mehr und mehr in Richtung eines immer geringeren Platzverbrauchs. Zusätzlich ist der konstruktive Aufwand für diese Speicher auch vergleichsweise hoch, speziell auch was den Transport des Papiers im Innenraum des Speichers betrifft.

Es ist daher eine Aufgabe der Erfindung, einen Speicher vorzuschlagen, welcher einen vergleichsweise geringen Platz benötigt und gleichzeitig vom konstruktiven Aufwand her einfach ist. Weiterhin soll der Speicher so konstruiert sein, dass er im Betrieb praktisch völlig entleert werden kann.

Diese Aufgabe wird durch einen Speicher, wie er durch die Merkmale des Patentanspruchs 1 charakterisiert ist, gelöst. Ein solcher Speicher zeichnet sich durch einen geringen Platzverbrauch einerseits und durch einen niedrigen konstruktiven Aufwand andererseits besonders aus. Darüberhinaus ist er zuverlässig und kostengünstig in der Herstellung. Besonders vorteilhafte Ausgestaltungen des erfindungsgemässen Speichers gehen aus den Merkmalen der abhängigen Ansprüche hervor.

Im folgenden wird die Erfindung anhand der Zeichnung näher erläutert. Es zeigen in schematischer Darstellung und/oder im Schnitt:
- Fig. 1: ein Ausführungsbeispiel des erfindungsgemässen Speichers in entleertem Zustand in Aufsicht,
- Fig. 2: den Speicher nach Fig. 1 beim Befüllen und in teilweise befülltem Zustand in Aufsicht,
- Fig. 3: den Speicher nach Fig. 1 beim Entleeren in Aufsicht
und
- Fig. 4: den Speicher nach Fig. 1 in Seitenansicht.

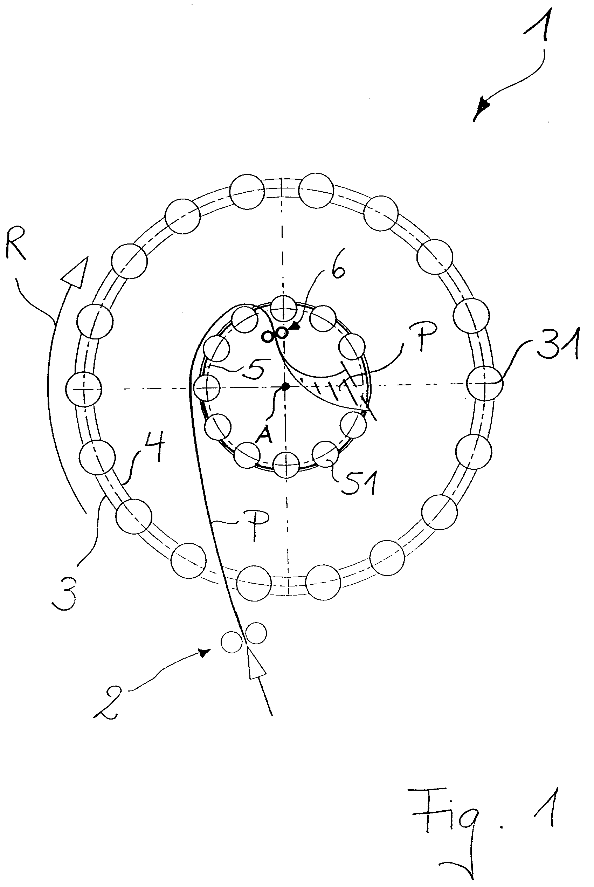

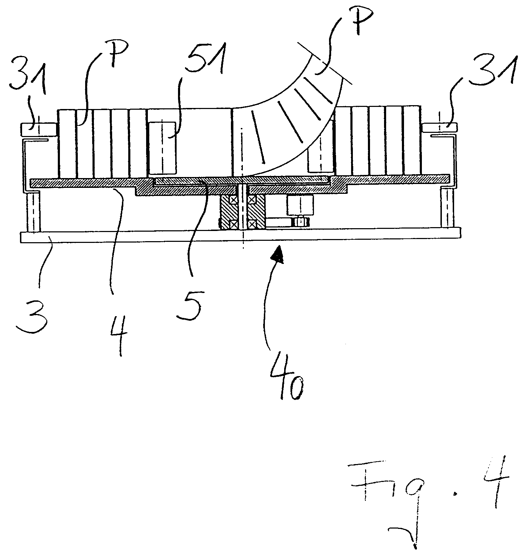

In dem in Fig. 1 in einer Aufsicht gezeigten Ausführungsbeispiel des erfindungsgemässen Speichers ist das lichtdichte Gehäuse sowie der lichtdichte Einlass und der lichtdichte Auslass weggelassen worden, damit man die Innenausstattung des Speichers besser erkennen kann. Der Speicher 1 umfasst an seinem Einlass ein erstes Rollenpaar 2, zwischen dem das Fotopapier P in den Innenaum des Speichers geführt ist. Ferner umfasst der Speicher eine kreisförmige Sockelplatte 3, auf der entlang des Umfangs der Sockelplatte mit Hilfe von Halterungen 30 (Fig. 4) mehrere drehbar gelagerte Rollen 31 angeordnet sind. Weiterhin umfasst der Speicher eine um eine Drehachse A rotierbare Scheibe 4, die mit Hilfe eines Motors 40 (Fog. 2, Fig. 4) in Richtung des Pfeils R antreibbar ist. Nahe der Drehachse A ist eine weitere Scheibe 5 angeordnet, entlang deren Umfang mehrere Rollen 51 angeordnet sind. Diese Scheibe 5 ist allerdings positionsfest angeordnet und nicht um die Drehachse A drehbar. Nahe der Drehachse A ist noch ein weiteres Rollenpaar 6 zur Führung des Fotopapiers P angeordnet.

In Fig. 1 ist der Speicher 1 noch nicht befüllt, das Fotopapier P ist lediglich eingefädelt und wird von dem Rollenpaar 6 gehalten. Zur Herstellung des Betriebszustandes wird der Speicher nun zunächst bis zu einem bestimmten Grad befüllt. Dazu wird mit Hilfe des Rollenpaars 2 Fotopapier in den Speicherinnenraum geführt. Dies erfolgt derart, dass das Papier im Aussenbereich des Innenraums zugeführt wird, wobei mit Aussenbereich der Bereich gemeint ist, der am weitesten von der Drehachse A entfernt ist. Zu dem Zeitpunkt, zu dem Fotopapier in den Innenraum des Speichers hineingeführt wird, treibt der Motor 40 die Scheibe 4 an. Das Zuführen von Fotopapier P in den Innenraum kann mit Hilfe von geeigneten Detektionsmitteln (nicht dargestellt) detektiert werden. Diese Detektionsmittel erzeugen dann ein Signal, welches dem Motor 40 zugeführt wird, der aufgrund dieses Signals die Scheibe 4 antreibt, gegen die eine Seitenkante des Fotopapiers anliegt. Es ist klar, dass die Scheibe 4 mit variabler Geschwindigkeit oder mit konstanter Geschwindigkeit antreibbar ist, je nachdem, mit welcher Geschwindigkeit das Fotopapier P vom Printer dem Speicher 1 zugeführt wird.

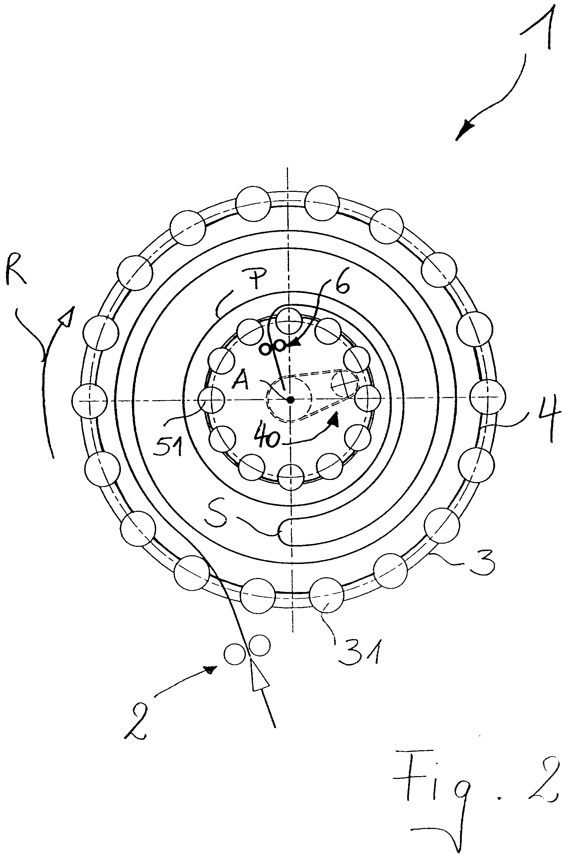

In Fig. 2 ist der Speicher 1 in teilweise befülltem Zustand zu erkennen. Aus Fig. 2 geht auch gut hervor, dass das Fotopapier P im Aussenbereich des Speicherinnenraums zugeführt wird. Beim folgenden Beschreiben des Befüllens des Speichers wird davon ausgegangen, dass im Moment noch kein Fotopapier aus dem Auslass des Speichers herausgeführt wird, dass also das Rollenpaar 6 im Moment nur das Fotopapier festhält. Beim Befüllen des Speichers bildet sich im Innenraum eine Schlaufe S, welche sich bei weiterem Zuführen von Fotopapier P in Richtung der Drehung (Pfeil R in Fig. 1) der Scheibe 4 entlang dem Umfang der Scheibe 5, speziell entlang der dort angeordneten Rollen 51, Schicht für Schicht um die Rollen 51 herumwickelt. Jedesmal wenn die Schlaufe S einen Umlauf um die Rollen 51 herum züruckgelegt hat, ist wieder eine Schicht mehr um die Scheibe 5 herum gewickelt.

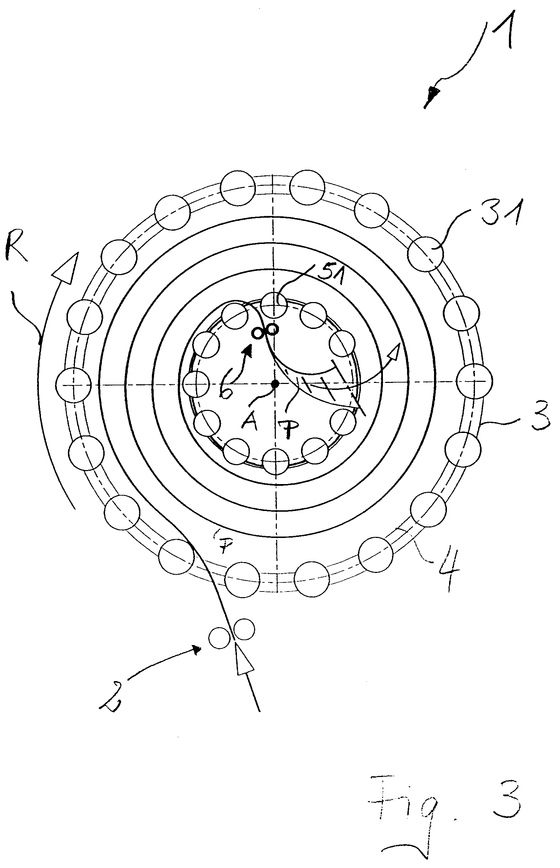

In Fig. 3 ist schliesslich der Speicher in einem Zustand dargestellt, in welchem bereits ein Teil des Fotopapiers P, welches im Innenraum des Speichers 1 gespeichert war, durch den Auslass herausgezogen worden ist, also z.B. wenn die dem Speicher nachfolgende Station, z.B. der Papierprozessor, Fotopapier P durch den Auslass hindurch aus dem Speicher 1 herauszieht, um es nasschemisch zu entwickeln. Vereinfachend ist gemäss Fig. 3 davon ausgegangen worden, dass kein Fotopapier durch den Einlass mehr in den Innenraum gelangt, also das Rollenpaar 2 lediglich das Fotopapier P hält, und dass die nachfolgende Station, also z.B. der Papierprozessor, bereits einiges Fotopapier P aus dem Speicher herausgezogen hat. Dass gemäss der Darstellung in Fig. 4 bereits Fotopapier P aus dem Speicher P herausgezogen ist, fällt besonders deshalb auf, weil die Schlaufe S nicht mehr existiert. Es ist also mindestens so viel Fotopapier P herausgezogen worden, dass die Schlaufe S gerade nicht mehr vorhanden ist.

Zur einfacheren Erläuterung ist sind die Vorgänge des Befüllens und des Entleerens des Speichers 1 jeweils getrennt betrachtet worden, wobei davon ausgegangen worden ist, dass immer nur ein Vorgang gerade abläuft. Beim Betrieb einer Verarbeitungsstrecke können natürlich die Vorgänge des Befüllens und Entleerens des Speichers 1 sehr wohl gleichzeitig ablaufen, wobei die Geschwindigkeiten der beiden Vorgänge Befüllen und Entleeren durchaus unterschiedlich sein können. Damit es zu keinen Unterbrechungen des Betriebs kommt, wird vor Betriebsbeginn der Speicher 1 zu einem bestimmten Grad befüllt, damit bereits beim Beginn des Betriebs Geschwindigkeitsschwankungen in beide Richtungen sofort kompensiert werden können. Beim Beginn des Betriebs wird also der Speicher 1 mit vom Printer kommendem, belichtetem Fotopapier P bis zu einem bestimmten Füllgrad, beispielsweise zu 70%, befüllt, bevor der Papierprozessor gestartet wird und Papier aus dem Speicher 1 zieht.

In Fig. 4 ist der Speicher 1 noch einmal in einer Seitenansicht und geschnitten dargestellt. Dabei ist der Speicher 1 hier in seiner Betriebsstellung, also im wesentlichen in einer horizontalen Ebene, dargestellt. Ebensogut ist er aber auch in einer vertikalen Ebene betriebstüchtig oder in einer gegenüber einer der beiden Ebenen beliebig geneigten Ebene. Der beschriebene Speicher ist zuverlässig, platzsparend und einfach vom konstruktiven Aufwand her.

## Patentansprüche

1. Speicher (1) für bandförmiges fotografisches Kopiermaterial (P),mit einem Einlass, durch den das Kopiermaterial in den Innenraum des Speichers geführt ist, und mit einem Auslass, durch den das Kopiermaterial wieder aus dem Innenraum des Speichers herausgeführt ist, sowie mit Mitteln zum Transport des in den Innenraum des Speichers eingetretenen Kopiermaterials, dadurch gekennzeichnet, dass die Mittel zum Transport des eingetretenen Kopiermaterials eine um eine Drehachse (A) herum rotierbare Scheibe (4) umfassen, gegen welche eine Seitenkante des eingetretenen Kopiermaterials (P) anliegt, dass das in den Speicher eintretende Kopiermaterial im Aussenbereich des Innenraums eintritt, welcher von der Drehachse (A) der Scheibe (4) am weitesten entfernt ist, und dass das aus dem Innenraum austretende Kopiermaterial im Innenbereich nahe der Drehachse (A) der Scheibe (4) aus dem Speicher herausgeführt ist.

2. Speicher nach Anspruch 1, dadurch gekennzeichnet, dass der Einlass im Aussenbereich des Speichers (1) angeordnet ist, und dass im Innenbereich nahe der Drehachse (A) der Scheibe (4) separate Führungsmittel (6) ortsfest angeordnet sind, zwischen denen das Kopiermaterial (P) geführt ist.

3. Speicher nach Anspruch 2, dadurch gekennzeichnet, dass sowohl der Einlass als auch die Führungsmittel jeweils ein Rollenpaar (2,6) umfassen, zwischen welchem das Kopiermaterial (P) geführt ist.

4. Speicher nach einem der Ansprüche 1 bis 3, dadurch gekennzeichnet, dass der Auslass im Innenbereich nahe der Drehachse (A) der Scheibe (4) angeordnet ist.
